## Europäisches Patentamt

## European Patent Office

## Office européen des brevets

(19)

(11) Veröffentlichungsnummer : **0 106 849**
**B1**

(12) # EUROPÄISCHE PATENTSCHRIFT

(45) Veröffentlichungstag der Patentschrift :
**21.01.87**

(21) Anmeldenummer : **83900697.0**

(22) Anmeldetag : **01.03.83**

(86) Internationale Anmeldenummer :
**PCT/CH 83/00023**

(87) Internationale Veröffentlichungsnummer :
**WO/8303928 (10.11.83 Gazette 83/26)**

(51) Int. Cl.⁴ : **H 02 P   1/28**

(54) ANLASSVORRICHTUNG FÜR ELEKTROMOTOREN UND VERFAHREN ZU DEREN BETRIEB.

(30) Priorität : **30.04.82 CH 2640/82**

(43) Veröffentlichungstag der Anmeldung :
**02.05.84 Patentblatt 84/18**

(45) Bekanntmachung des Hinweises auf die Patenterteilung : **21.01.87 Patentblatt 87/04**

(84) Benannte Vertragsstaaten :
**AT BE CH DE FR GB LI LU NL SE**

(56) Entgegenhaltungen :
**DE-A- 2 654 166**
**FR-A- 1 402 042**
**GB-A-   800 207**
**US-A- 3 815 001**

(73) Patentinhaber : **Intro Marketing GmbH**
**Urbanstrasse 114**
**D-7000 Stuttgart 1 (DE)**

(72) Erfinder : **RICHENBERGER, Josef**
**Riedmattstrasse 5**
**CH-6084 Horw (CH)**

(74) Vertreter : **Blum, Rudolf Emil Ernst et al**
**c/o E. Blum & Co Patentanwälte Vorderberg 11**
**CH-8044 Zürich (CH)**

**Beschreibung**

Die Erfindung betrifft eine Anlassvorrichtung für Elektromotoren, welche in jeder Phasenleitung des Motors n Anlasswiderstände und eine Mehrzahl von steuerbaren Schaltern aufweist, wobei n eine ganze Zahl ist, sowie mit einer Steuerungsanordnung für die Schalter, deren Steuerausgänge mit den Steuereingängen der Schalter verbunden sind, und durch welche Steuerungsanordnung Widerstandskombinationen in Reihenfolge des abnehmenden Widerstandswertes in Serie mit dem Motor in die jeweilige Phasenleitung schaltbar sind.

Ferner betrifft die Erfindung ein Verfahren zum Betrieb einer solchen Anlassvorrichtung.

Beim Einschalten von Elektromotoren muss während des Hochlaufens der Strom begrenzt werden. Mit der zunehmenden Verbreitung von ungleichmässig stark belasteten Motoren hoher Leistung, wie sie z. B. bei Kompressoren für Wärmepumpen und Klimageräte benötigt werden, stellt sich immer häufiger das Problem den Anlauf solcher Motoren bei voller Belastung derselben zu ermöglichen, ohne durch den hohen Anlaufstrom störende Spannungseinbrüche auf dem Netz hervorzurufen.

Bekannt sind Phasenanschnittsteuerungen, welche allerdings einen sehr hohen Entstöraufwand bedingen, da sie energiereiche, hochfrequente Störspektren erzeugen, welche nur stark gedämpft ins Netz gelangen dürfen. Eine grosse Verbreitung solcher Phasenanschnittsteuerungen ist deshalb aus Störgründen nicht wünschenswert.

Bei Anlassschaltern mit Stern-Dreieck-Schaltern ergibt sich bei hochbelasteten Motoren (z. B. mit einem Kompressor beim oberen Kolbentotpunkt) bei der Umschaltung von Stern auf Dreieck ein Kurzer Motorenstillstand, der zu einem starken Stromstoss bei der Dreiecksumschaltung führt.

Widerstandsanlasser weisen diese Nachteile nicht auf. Bei bekannten Anlassern mit Widerständen, welche parallel oder seriell angeordnet sein können, werden die Widerstände einzeln zugeschaltet. Die einzelnen Widerstände nehmen deshalb während relativ langer Zeit eine hohe Verlustleistung auf und müssen entsprechend dimensioniert sein. Dementsprechend müssen Widerstände mit grossen Abmessungen oder mit Zwangskühlung verwendet werden. Solche Anordnungen benötigen viel Platz und sind teuer. Die Stromzunahme erfolgt dabei in so vielen Stufen wie Widerstände vorhanden sind, d. h. in der Regel nur grob gestuft.

Aus der FR-A-1 402 042 ist eine Widerstandsanlassvorrichtung bekannt, bei welcher die Anzahl der Stufen erhöht wird, indem die Widerstandskombinationen in den einzelnen Phasen verschoben zugeschaltet werden. Dies belastet allerdings die Phasen asymmetrisch und löst auch nicht das Problem der Belastung des einzelnen Widerstandes.

Aus der US-A-3 815 001 ist die Verwendung von elektronischen Schaltern zur Widerstandumschaltung in Motoranlassvorrichtungen bekannt.

Der vorliegenden Erfindung liegt die Aufgabe zugrunde, eine verbesserte Anlassvorrichtung zu schaffen, welche die erwähnten Nachteile nicht oder nur in verringertem Mass aufweist. Dies wird dadurch erreicht, dass durch die Steuerungsanordnung Steuersignale für die Schalter erzeugbar sind, mittels welchen alle $2^n$ Parallel- oder Reihenschaltungskombinationen der n Widerstände in die Phasenleitung schaltbar sind.

Ferner liegt der Erfindung die Aufgabe zugrunde, ein Verfahren zum Betrieb der Anlassvorrichtung nach dem Hauptanspruch zu zeigen. Dies ist dadurch gekennzeichnet, dass die $2^n$ Parallel- oder Reihenschaltungskombinationen in die jeweilige Phasenleitung des Motors geschaltet werden, um den Anlaufstrom in $2^n$ Stufen zunehmen zu lassen, wobei die Zeitdauer der Zuschaltung für jede Widerstandkombination so gewählt wird, dass eine gewünschte Stromzunahmecharakteristik für den Motor erreicht wird.

Durch die Zu- und Wegschaltung der Widerstände wird der einzelne Widerstand zeitlich und strommässig geringer belastet, was eine wesentliche Verkleinerung der Widerstandsabmessungen erlaubt. Ferner wird eine feiner gestufte Stromzunahme und eine einfache Beeinflussung der Stromzunahmecharakteristik ermöglicht.

Bei einer bevorzugten Ausführungsart sind fünf Widerstände mit dem Widerstandsverhältnis 1 : 2 : 4 : 8 : 16 vorgesehen.

Bei einem bevorzugten Verfahren zum Betrieb werden alle 32 mit fünf Widerständen möglichen Parallel- oder Serieschaltungskombinationen der Reihe nach zu- und weggeschaltet. Bei einem weiteren bevorzugten Verfahren zum Betrieb wird die Zuschaltdauer jeder Widerstandskombination derart gewählt, dass der Motorstrom annähernd linear zunimmt.

Im folgenden wird ein Ausführungsbeispiel der Erfindung anhand der Figuren näher erläutert. Darin zeigen

Figur 1 ein Prinzipschema einer Anlassvorrichtung mit 4 Widerständen ;

Figur 2 eine mögliche Schaltungsanordnung für die Steuerungsanordnung der Anlassvorrichtung von Fig. 1 ;

Figur 3a ein Widerstands-Zeit Diagramm für die Anlassvorrichtung von Fig. 1 ;

Figur 3b ein weiteres Widerstands-Zeit Diagramm.

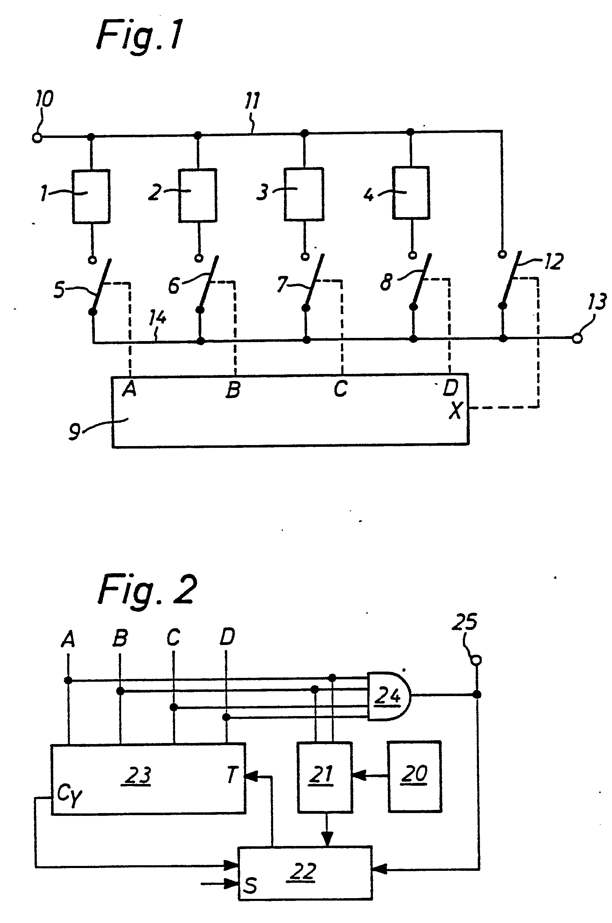

In Fig. 1 ist das Prinzipschema einer Anlassvorrichtung mit vier Widerständen 1-4 gezeigt, welche parallel zueinander liegen und deren erste Anschlüsse mittels der Klemme 10 und der Sammelleitung 11 mit dem Netz verbunden sind. Die Schalter 5-8 stellen in geschlossenem Zustand die Verbindung zwischen den zweiten Anschlüssen der entsprechenden Widerstände und der Sammelleitung 14 her. An deren Klemme 13 wird der (nicht dargestellte) Motor angeschlossen. In jeder Phasenleitung ist eine solche Anordnung von Schaltern und Widerständen vorzusehen, doch wird sie hier nur einmal dargestellt. Der Schalter 12 stellt nach dem Hochlauf des Motors eine direkte Verbindung zwischen dem Motor und der Netzzuleitung her und überbrückt damit die Widerstände und Schalter der Anlassvorrichtung. Dieser Schalter 12 wird in der Regel von einem mechanischen Schütz gebildet und ist an und für sich unabhängig von der Anlassvorrichtung, z B. ein zeitgesteuerter Schalter. Vorzugsweise kann er aber ebenfalls von der Steuerungsanordnung 9 geschaltet werden, wie dies in Fig. 1 gezeigt ist.

Die Steuerungsanordnung ist mit ihren Steuerausgängen A-D mit den entsprechenden Steuereingängen der Schalter 5-8 verbunden, welche von handelsüblichen Halbleiterschaltelementen z. B. Triacs, Transistoren, Leistungs-FET usw. gebildet werden. Die Ausgänge der Steuerungsanordnung 9 nehmen zwei logische Zustände an, ein hohes Potential an den Ausgängen A-D wird als « 1 » bezeichnet und die entsprechenden Schalter sind geschlossen, ein tiefes Potential an den Ausgängen wird als « 0 » dargestellt und die entsprechenden Schalter stehen offen. Zum Anlauf des Motors können nun von der Steuerungsanordnung 9 alle möglichen Kombinationen von Schalterstellungen durchlaufen werden, um ein strombegrenztes Hochlaufen mit geringer Belastung der Widerstände 1-4 zu ergeben.

Werden die Widerstände 1-4 zu 25 Ohm, 50 Ohm, 100 Ohm und 200 Ohm gewählt so ergeben sich mit den unten dargestellten Zuständen der Steuerausgänge A-D die folgenden, gerundeten Widerstandswerte

| Ausgänge | A | B | C | D | Widerstandswert [Ohm] |
|---|---|---|---|---|---|
| | 0 | 0 | 0 | 0 | ( $\infty$ ) |
| | 0 | 0 | 0 | 1 | 200 |
| | 0 | 0 | 1 | 0 | 100 |
| | 0 | 0 | 1 | 1 | 67 |
| | 0 | 1 | 0 | 0 | 50 |
| | ⋮ | ⋮ | ⋮ | ⋮ | |
| | 1 | 1 | 0 | 1 | 15 |
| | 1 | 1 | 1 | 0 | 14 |
| | 1 | 1 | 1 | 1 | 13 |

Insgesamt stehen bei vier Widerständen so 16 Widerstandskombinationen zur Verfügung.

Durch das Zu- und Wegschalten ergibt sich als hauptsächlicher Vorteil eine gute Verteilung der Belastung für die Widerstände. So ist es z. B. möglich, bei einer Ausführung mit fünf Widerständen pro Phase, mit nur mit 50 W belastbaren Widerständen, Motoren mit 15 KW Leistungsaufnahme hochlaufen zu lassen.

Nach dem Erreichen des kleinsten Widerstandswertes von 13 Ohm bzw. des Steuerausgangswertes 1 1 1 1 wird der Schalter 12 geschlossen, um den hochgelaufenen Motor direkt mit dem Netz zu verbinden und die Schalter 5-8 werden wieder geöffnet.

Zur Beeinflussung des zeitlichen Verlaufs des Widerstandswertes und damit der Stromzunahme kann die Zuschaltdauer für die einzelnen Widerstandswerte unterschiedlich gewählt werden.

Zur Erzeugung der Steuersignale für die Schalter 5-8 sowie Schalter 12 kann z. B. ein handelsüblicher Patterngenerator verwendet werden. Fig. 2 zeigt zusätzlich eine einfache Prinzipschaltung zur Erzeugung der Steuersignale, welche z. B. mit handelsüblichen TTL-Logikelementen aufgebaut werden kann. Der Taktgeber 20 erzeugt ein Rechtecksignal mit gleichbleibender Frequenz, wobei keine hohen Anforderungen an die Frequenzkonstanz gestellt werden, welches über einen Teiler mit variablem Teilverhältnis 21 und eine Kontrollschaltung 22 an dem Takteingang T eines 4-bit Zählers 23 gegeben wird.

Die vier Zählerausgänge A-D stellen die Steuersignale für die Schalter zur Verfügung. Wenn der Zähler 23 aus dem Ruhezustand (Ausgänge 0 0 0 0) zu zählen beginnt, indem die Kontrollschaltung 23 nach einem Startimpuls an ihrem Eingang S das Rechtecksignal vom Teiler 21 an den Takteingang des Zählers anlegt, durchlaufen die Zählerausgänge nacheinander alle 16 möglichen Zustände (Schalterstellungen bzw. Widerstandskombinationen). Durch die Decodierung der Zählerausgänge A, B, welche immer nach vier Taktimpulsen ihren Zustand ändern (von 0 0 auf 0 1 auf 1 0 und schliesslich 1 1) kann der variable Teiler gesteuert werden. Dadurch erhält man vier Gruppen von Widerstandskombinationen mit unterschiedlicher Zuschaltdauer. Wenn der höchste Zählerstand 1 1 1 1 erreicht ist, wird das durch den Decoder 24 festgestellt und an die Klemme 25 eine logische 1 angelegt, zur Steuerung des Schalters 12. Ferner wird dieses Signal an die Kontrollschaltung 22 gegeben zur Verzögerung des nächsten Taktes an den Zähler bis der Schalter 12 sicher geschlossen ist. Das nächste Taktsignal ergibt dann den Zählerstand

0 0 0 0 und ein Uebertragssignal am Carry-Ausgang Cy des Zählers. Dieses wird der Kontrollschaltung 22 zugeführt und unterbricht das Taktsignal bis zum nächsten Startimpuls auf den Eingang S der Kontrollschaltung 22.

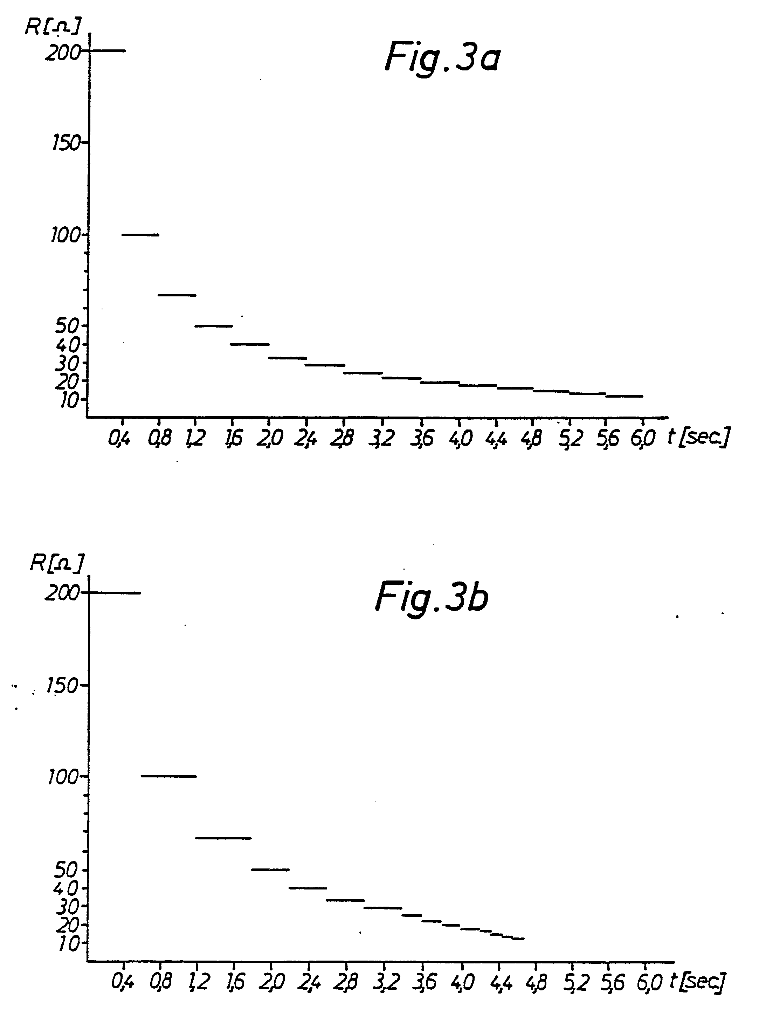

Fig. 3a zeigt den Widerstandsverlauf über der Zeit für das Beispiel mit vier Widerständen von 25, 50, 100 und 200 Ohm. Die Kurve A ergibt sich bei gleicher Zuschaltdauer für alle Widerstandskombinationen, die Kurve B von Fig. 3b ergibt sich wie ersichtlich bei verschieden langer Zuschaltdauer von Widerstandskombinationen.

**Patentansprüche**

1. Anlassvorrichtung für Elektromotoren, welche in jeder Phasenleitung des Motors n Anlasswiderstände und eine Mehrzahl von steuerbaren Schaltern aufweist, wobei n eine ganze Zahl ist, sowie mit einer Steuerungsanordnung für die Schalter, deren Steuerausgänge mit den Steuereingängen der Schalter verbunden sind, und durch welche Steuerungsanordnung Widerstandskombinationen in Reihenfolge des abnehmenden Widerstandswertes in Serie mit dem Motor in die jeweilige Phasenleitung schaltbar sind, dadurch gekennzeichnet, dass durch die Steuerungsanordnung Steuersignale für die Schalter erzeugbar sind, mittels welchen alle $2^n$ Parallel- oder Reihenschaltungskombinationen der n Widerstände in die Phasenleitung schaltbar sind.

2. Anlassvorrichtung nach Anspruch 1, dadurch gekennzeichnet, dass Widerstände mit voneinander verschiedenem Widerstandswert vorgesehen sind.

3. Anlassvorrichtung nach Anspruch 3, dadurch gekennzeichnet, dass fünf Widerstände mit dem Widerstandsverhältnis $1 : 2 : 4 : 8 : 16$ vorgesehen sind.

4. Anlassvorrichtung nach Anspruch 1, dadurch gekennzeichnet, dass die Schalter von Halbleiterschaltelementen gebildet werden.

5. Anlassvorrichtung nach Anspruch 1, dadurch gekennzeichnet, dass die Steuerungsanordnung von Logikschaltelementen mit binären Ausgangszuständen gebildet wird.

6. Verfahren zum Betrieb einer Anlassvorrichtung nach Anspruch 1, dadurch gekennzeichnet, dass die $2^n$ Parallel- oder Reihenschaltungskombinationen in die jeweilige Phasenleitung des Motors geschaltet werden, um den Anlaufstrom in $2^n$ Stufen zunehmen zu lassen, wobei die Zeitdauer der Zuschaltung für jede Widerstandskombination so gewählt wird, dass eine gewünschte Stromzunahmecharakteristik für den Motor erreicht wird.

7. Verfahren zum Betrieb nach Anspruch 6, dadurch gekennzeichnet, dass fünf Widerstände mit der Widerstandsverhältnis $1 : 2 : 4 : 8 : 16$ vorgesehen sind.

8. Verfahren zum Betrieb nach Anspruch 6, dadurch gekennzeichnet, dass die Zeitdauer der Zuschaltung der Widerstandskombinationen derart gewählt wird, dass eine annähernd lineare Stromzunahme erfolgt.

9. Verfahren zum Betrieb nach Anspruch 8, dadurch gekennzeichnet, dass die Widerstandskombinationen in vier Gruppen eingeteilt sind, wobei die Zuschaltdauer der Widerstandskombinationen in jeder Gruppe gleich aber von einer Gruppe zur anderen abnehmend ist.

**Claims**

1. A starter for electric motors, having n starting resistors and a plurality of switches in each phase line of said motor, n being an integer, and having control means for said switches, the outputs of said means being connected to the control inputs of said switches, by which control means combinations of said resistors having successively decreasing resistance value are switchable in each phase line in series with said motor, characterized in that said control means are able to generate control signals by which all $2^n$ parallel or series combinations, respectively, are switchable in said phase line.

2. A starter according to claim 1, characterized in that resistors with different resistance value are provided.

3. A starter according to claim 2, characterized in that five resistors having a resistance ratio of $1 : 2 : 4 : 8 : 16$ are provided.

4. A starter according to claim 1, characterized in that said switches are semiconductor switching elements.

5. A starter according to claim 1, characterized in that said control means comprise logic circuit elements with binary output states.

6. Method for operating a starter as described in claim 1, characterized in that said $2^n$ parallel or series combinations, respectively, are switched in each phase line for increasing the starting current in $2^n$ steps, whereby the switch-on duration for each combination is selected as to achieve preselected characteristics for said current increase.

7. Method for operating according to claim 6, characterized in that five resistors with a resistance ratio of $1 : 2 : 4 : 8 : 16$ are provided.

8. Method for operating according to claim 6, characterized in that the duration of switch-on for said resistor combinations is selected to achieve an approximately linear current increase.

9. Method for operating according to claim 8, characterized in that said resistor combinations are divided in four groups, whereby the switch-on duration for said resistor combinations is the same within each group but decreases from one group to the next.

## Revendications

1. Dispositif de démarrage pour moteurs électriques, présentant dans chaque circuit de phase du moteur n résistances de démarrage et plusieurs commutateurs pouvant être commandés, n représentant un nombre entier, ce dispositif comportant en outre un système de commande des commutateurs dont les sorties de commande sont reliées aux entrées de commande des commutateurs, ledit système de commande permettant de commuter des combinaisons de résistances en série avec le moteur dans le circuit de phase correspondant, selon un ordre décroissant des valeurs ohmiques, caractérisé en ce que le système de commande permet de produire des signaux de commande pour les commutateurs au moyen desquels toutes les $2^n$ combinaisons de montage en parallèle ou en série des n résistances peuvent être commutées dans le circuit de phase.

2. Dispositif de démarrage conforme à la revendication 1, caractérisé en ce que les résistances présentent chacune une valeur ohmique différente des autres.

3. Dispositif de démarrage conforme à la revendication 2, caractérisé en ce que cinq des résistances présentent le rapport de valeur ohmique $1 : 2 : 4 : 8 : 16$.

4. Dispositif de démarrage conforme à la revendication 1, caractérisé en ce que les commutateurs sont constitués par des éléments de commutation semi-conducteurs.

5. Dispositif de démarrage conforme à la revendication 1, caractérisé en ce que le système de commande est constitué d'éléments de commutation logiques avec des états de sortie binaires.

6. Procédé pour l'actionnement d'un dispositif de démarrage conforme à la revendication 1, caractérisé en ce que les $2^n$ combinaisons de commutation en parallèle ou en série sont commutées dans le circuit de phase correspondant du moteur, de manière à ce que le courant de démarrage augmente par $2^n$ paliers, la durée de la conjonction pour chaque combinaison de résistances étant choisie de telle sorte que le moteur atteigne une caractéristique d'augmentation de courant souhaitée.

7. Procédé d'actionnement conforme à la revendication 6, caractérisé en ce que cinq résistances présentent le rapport de valeur ohmique $1 : 2 : 4 : 8 : 16$.

8. Procédé d'actionnement conforme à la revendication 6, caractérisé en ce que la durée de la conjonction des combinaisons de résistances est choisie de manière à produire une augmentation sensiblement linéaire du courant.

9. Procédé d'actionnement conforme à la revendication 8, caractérisé en ce que les combinaisons de résistances sont divisées en 4 groupes, la durée de conjonction des combinaisons de résistances étant identique dans chaque groupe mais décroissante d'un groupe à l'autre.

## Fig.1

## Fig. 2

1

# Fig.3a

# Fig.3b